# EUROPEAN PATENT SPECIFICATION

(11) **EP 3 213 541 B1**
(45) Date of publication and mention of the grant of the patent: **17.06.2020**
(21) Application number: 14793836.9
(22) Date of filing: 30.10.2014
(51) Int. Cl.: H04W 4/24, H04L 29/12, H04W 88/08, H04W 84/12

(54) **RADIUS/DIAMETER AUTHENTICATION BASED GX POLICY MANAGEMENT TRIGGERED BY USER LOCATION CHANGE**
AUF RADIUS-/DURCHMESSERAUTHENTIFIZIERUNG BASIERENDE GX-RICHTLINIENVERWALTUNG BEI ÄNDERUNG EINER BENUTZERSTANDORTES
GESTION DE POLITIQUE GX BASÉE SUR UNE AUTHENTIFICATION RADIUS/DIAMETER ET DÉCLENCHÉE PAR UN CHANGEMENT DE LOCALISATION DE L'UTILISATEUR

(43) Date of publication of application: 06.09.2017
(73) Proprietor: Telefonaktiebolaget LM Ericsson (publ), 164 83 Stockholm (SE)
(72) Inventor: TERCERO, Pedro, 52064 Aachen (DE); KHAN, Akbar, 52134 Herzogenrath (DE); CRUZADO GUTIERREZ, Miguel, E-28805 Madrid (ES); RODRIGUES DE MOURA LEITAO, Filipe Alexandre, E-28043 Madrid (ES)
(74) Representative: Ericsson
(86) International application number: PCT/EP2014/073381
(87) International publication number: WO 2016/066206

(56) References cited:
- WO-A1-2013/053896
- WO-A1-2014/005652

## Description

### Technical field

The present disclosure generally relates to the field of location services in wireless local area networks. More specifically, the present disclosure relates to a technique of supporting provisioning of one or more of a plurality of rules of a policy managing entity provided in a core network of a communication network.

### Background

Location services using Wi-Fi access are getting more and more important for customers. Customers demand solutions for policy management and advertising based on the user location.

The Wireless Broadband Alliance (WBA) has specified location information parameters that can be shared by Wi-Fi Access Points during the authentication procedure in WRIX (Wireless Roaming Intermediary eXchange), more particularly in WRIX-location (WRIX-I). WRIX offers a modularized set of standard service specifications to facilitate commercial roaming between operators. It includes WRIX-i (Interconnect), WRIX-I (Location), WRIX-d (Data Clearing) and WRIX-f (Financial Settlement). Each of these can be deployed by Visited Network Providers (VNPs) and Home Service Providers (HSPs) either in-house or through an intermediary WRIX service provider. The latest release of WRIX includes support for EAP authentication providing the transport and indicating which radius attributes to use, and recommends Network operators support the following EAP methods: Extensible Authentication Protocol (EAP) for GSM Subscriber Identity Module (EAP-SIM), EAP for Universal Mobile Telecommunications System (UMTS) Authentication and Key Agreement (EAP-AKA), EAP Transport Layer Security (EAP-TLS), and EAP Tunneled Transport Layer Security (EAP-TTLS). More information about the WRIX protocol can be found at the WBA Wi-Fi Roaming Guidelines white paper.

The Internet Engineering Task Force (IETF) has also already specified location information parameters that can be shared by Wi-Fi Access Points during the authentication procedure in Request For Comments (RFC) 3580 & 5580. RFC 3580 provides suggestions on Remote Authentication Dial In User Service (RADIUS) usage by IEEE 802.1X Authenticators. IEEE 802.1X enables authenticated access to IEEE 802 media, including Ethernet, Token Ring, and 802.11 wireless Local Area Networks (LANs). Although RADIUS support is optional within IEEE 802.1X, it is expected that many IEEE 802.1X Authenticators will function as RADIUS clients. RFC 5580 describes procedures for conveying access-network ownership and location information based on civic and geospatial location formats in RADIUS and Diameter. RFC 5580 defines attributes within RADIUS and Diameter that can be used to convey location-related information within authentication and accounting exchanges.

3GPP Rel. 12 NETLOC_TWAN WID has finalized some location identifier parameters that can be used between Trusted Wireless Access Gateway (TWAG) and Packet Data Network (PDN) Gateway (GW) for S2a session as location identifiers for Trusted Wireless Access Network (TWAN) access network (Wi-Fi Access Points/Hotspot locations). Subsequently these additional location identifier parameters can also be used between PDN GW and Policy and Charging Rule Function (PCRF) for location based policies using Gx interface.

Finally, it has been proposed to use existing procedures on S2a interface to update location in the NETLOC_TWAN WID, i.e., Bearer Modification. This means that either PDN GW (in short: PGW) or TWAG would send a Modify Bearer message to the peer entity, which will result in the new location shared in the response message. The PGW can then subsequently send a Gx Credit Control Request (CCR) message to PCRF with the new location information.

The 3GPP solution, at the moment, only focusses on the Packet Core network receiving location information based on initial S2a session setup between TWAG and PDN GW. Moreover, the current 3GPP solution is not efficient since it results in an increase of signalling between TWAG and PDN GW, and between PDN GW and PCRF. Further, the 3GPP solution relies on the retrieval of the location information, i.e. the TWAN-Identifier, based on the ability of TWAG to get that information. However, in the current standards (3GPP TS 23.203, 3GPP TS 23.402 and BBF TR-291) it is not clear how that node (the TWAG) should get that information, which may result in implementation problems.

The WO 2013/053896 A1 relates to dynamic Policy and Charging Rules Function, PCRF, assisted management of network parameters. Therein, network related parameters are sent to or received from a PCRF node through a direct MME/S4-SGSN-PCRF interface.

The WO 2014/005652 A1 relates to integration of WLAN access networks into cellular communication networks. Location information, such as SSID, WLAN access point name, etc. is included in a protocol message of the cellular communications system, and communicated to the cellular communications system. Furthermore, an event trigger, similar to event triggers on the Gx interface which may be set by the PCRF, may be set by the PCRF/OCS in the WLAN to request up-to-date location information.

In order to implement the existing solution defined in 3GPP Rel. 12, vendors would need to update three functions/nodes: TWAG, PDN GW and PCRF. This increases complexity of the 3GPP solution.

### Summary

Accordingly, there is a need for an improved technique for location based/dependent policy provisioning.

In the present disclosure a mechanism is proposed to update location information in core networks based on requests received from wireless access networks. The invention is defined in the independent claims 1, 9, 10 and 12.

According to a first aspect, a method of supporting provisioning of one or more of a plurality of rules of a policy managing entity provided in a core network of a communication network is provided. The policy managing entity is arranged between an access gateway of a wireless local area network and an authentication server of the core network of the communication network. The method comprises receiving, by the policy managing entity from the access gateway, an access request message. The access request message comprises location information. The access request message further comprises identification information of a terminal in the coverage area of an access point connected with the access gateway. The identification information uniquely identifies the terminal. The method further comprises evaluating, by the policy managing entity, one or more of the plurality of rules to be applied based on the location information, and creating, by the policy managing entity, a user session for the terminal by binding the identification information with the location information. Therein, the policy managing entity acts as a proxy between the access gateway and the authentication server.

A core network, or network core, may be understood as the central part of a (tele)communication(s) network that provides various services to customers who are connected by an access network. The access network may be understood as the part of a (tele)communication(s) network which connects subscribers to their (immediate) service provider. In computer networking, an access point, such as a wireless Access Point or simply Access Point (AP), may be understood as a device that allows wireless devices to connect to a wired network using Wi-Fi, or related standards.

The term "wireless local area network" may relate to multiple wireless local area techniques such as Wireless Local Area Network (WLAN), Wi-Fi® (also spelled Wifi or WiFi) and WiMAX. WLAN is normally understood as a wireless computer network that links two or more devices using a wireless distribution method within a limited area such as a home, school, computer laboratory, or office building. This gives users the ability to move around within a local coverage area and still be connected to the network, and can provide a connection to the wider Internet. Most modern WLANs are based on IEEE 802.11 standards, marketed under the Wi-Fi® brand name. Wi-Fi® is a local area wireless technology that allows an electronic device to exchange data or connect to the internet. Currently, 2.4 GHz UHF and 5 GHz SHF radio waves are used. The Wi-Fi® Alliance defines Wi-Fi® as any "wireless local area network (WLAN) products that are based on the Institute of Electrical and Electronics Engineers' (IEEE) 802.11 standards". However, since most modern WLANs are based on these standards, the term "Wi-Fi" is used in general English as a synonym for "WLAN". WiMAX refers to interoperable implementations of the IEEE 802.16 family of wireless-networks standards ratified by the WiMAX Forum.

Herein, when it is referred to a "wireless local area network" this shall imply no limitation to any of the aforementioned techniques.

The one or more of the plurality of rules may be applied to certain traffic. The traffic to which the rules may be applied may be identified by information included in the one or more rules. In other words, the one or more rules may be applied to traffic as identified by the one or more rules, e.g., as identified by information included in the one or more rules. For example, the one or more rules may contain information that allows identification of the traffic, e.g. Internet Protocol (IP) traffic, and parameters which may be applied to the traffic in order to implement the one or more rules. The application of the one or more rules may be flow/bearer based. In consequence, the evaluation may be understood as a kind of selection or composition of the one or more rules to be applied. When the one or more rules are applied, a bearer may be created or an existing bearer may be modified, thereby affecting the behavior of the flow(s) that are served by that bearer.

Any of the details provided in the following may be equally applicable to all method aspects described herein.

The aforementioned created user session may be part of an authentication procedure performed by the terminal toward the communication network, e.g. toward an authenticator/authentication server of the core network of the communication network. The authentication server may comprise Authentication Authorization Accounting (AAA) functionality or may comprise or be configured as an AAA server. The policy managing entity may provide a plurality of rules which may be applied to traffic. By evaluating, based on the location information, which of the plurality of rules are to be applied, the policy managing entity may determine or select one or more of the plurality of rules.

The method may further comprise creating, by the policy managing entity, a Gx session for the terminal upon receipt of a Credit Control Request (CCR) message. The Gx session may be understood as a basic Gx entity. The Gx session may uniquely describe a subscriber and, for example, single IP mapping. The Gx session may be identified by a unique string (session-id). The Gx session may be created both on a server and a subscriber. Each Gx message may include the session-id, which identifies the session that the message refers to. The Gx session creation may include the exchange of Credit Control Request (CCR) and Credit Control Answer (CCA) messages. In the CCR, the subscriber IP and subscriber name may be sent to the policy managing entity, and the policy managing entity may reply with a CCA message, which may include a subset of the subscriber parameters. After successful receipt of the CCA message, the Gx session may be successfully opened. During the lifetime of a Gx session, a CCR update message may be sent. In the CCR update message, the policy managing entity may be asked for updates on the parameters. The Gx session may be ended by the subscriber or the policy managing entity.

The step of evaluating may comprise evaluating, by the policy managing entity, one or more of the plurality of rules to be applied based on the location information, if a user session created for the terminal exists in the policy managing entity. The user session may have been created as part of the authentication procedure mentioned above. If there is an ongoing user session for the terminal in the policy managing entity, it may be evaluated, by the policy managing entity, which one or more of the plurality of rules are to be applied.

The method may comprise triggering a Gx session re-authorization procedure, if a Gx session created for the terminal exists in the policy managing entity. In other words, the method may comprise triggering a Gx session re-authorization procedure, if there is an ongoing Gx session for the terminal in the policy managing entity.

The step of evaluating may comprise re-evaluating, by the policy managing entity, one or more of the plurality of rules to be applied to the terminal based on the location information, if a Gx session created for the terminal exists in the policy managing entity. In other words, the method may comprise re-evaluating, by the policy managing entity, one or more of the plurality of rules to be applied based on the location information, if there is an ongoing Gx session for the terminal in the policy managing entity.

The access request message may comprise or may be a Remote Authentication Dial In User Service (RADIUS) or Diameter access request message. RADIUS may be understood as a networking protocol that provides centralized Authentication, Authorization, and Accounting (AAA) management for users that connect and use a network service. Diameter may also be understood as an AAA protocol for computer networks. It evolved from the RADIUS protocol.

For example, the evaluated one or more of the plurality of rules are to be applied to a Gx session for the terminal (related to the terminal).

The location information may be provided by the access point. The location information may specify at least one of the location of the terminal and one or more access points serving the terminal. The location information may uniquely identify the access point. For example, the location information may comprise a Basic Service Set Identification (BSSID). The location information may identify two or more access points including the access point. For example, the location information may comprise Homogenous Extended Service Set Identification (HESSID). The location information does thus not necessarily indicate the exact location of the terminal. Rather the location information may specify that the terminal is located within a certain coverage area of one or more APs.

The identification information may be configured as or may comprise at least one of a MAC address of the terminal, an International Mobile Subscriber Identity (IMSI) and an MSISDN.

The policy managing entity may be configured as or may comprise a Policy and Charging Rule Function (PCRF). Alternatively or additionally, the plurality of policies may comprise at least one of Policy Control and Charging (PCC) rules and Quality of Service (QoS) rules. The policy managing entity may be configured as a functional element that encompasses policy control decision and flow based charging control functionalities. The policy managing entity may provide network control regarding at least one of service data flow detection, gating, QoS and flow based charging towards a policy enforcing entity. The policy managing entity may provision one or more rules to the policy enforcing entity via a suitable interface such as a Gx interface. The policy managing entity rule decisions may be based on the received location information. After deciding on the rules to be applied, the policy managing entity may indicate via the Gx interface the one or more rules to be applied at the policy enforcing entity. The PCC rules may contain service data flow, information that allows identification of traffic such as IP traffic, charging parameters that are used to charge this traffic, and QoS parameters to be applied to the traffic such as the IP traffic. The application of the rules may be regarded as flow/bearer based. That is, the consequence of the "evaluation" may be the selection or composition of the one or more rules to be applied at the policy enforcing entity, i.e. the policy enforcing entity may create or modify an existing bearer, thus affecting the behavior of the flow(s) that are served by that bearer. The one or more rules to be applied at the policy enforcing entity may be sent by the policy managing entity via a suitable interface. For example, in case the policy enforcing entity is configured as a Policy and Charging Enforcement Function (PCEF), the one or more rules to be applied at the PCEF may be sent by the policy managing entity by the Gx interface, or if the one or more rules are to be applied (or enforced) at another enforcement point, e.g. Deep Packet Inspection (DPI), by another corresponding interface.

According to a second aspect, a policy managing entity for supporting provisioning of one or more of a plurality of rules is provided. The policy managing entity is provided in a core network of a communication network and is arranged between an access gateway of a wireless local area network and an authentication server of the core network of the communication network. The policy managing entity comprises a receiving component and an evaluating component. The receiving component is configured to receive an access request message. The access request message comprises location information. The access request message further comprises identification information of a terminal in the coverage area of an access point connected to the access gateway. The identification information uniquely identifies the terminal. The evaluating component is configured to evaluate one or more of the plurality of rules to be applied based on the location information. The policy managing entity is further configured to create a user session for the terminal by binding the identification information with the location information and to act as a proxy between the access gateway and the authentication server.

The policy managing entity according to the second aspect may be configured to perform any one of the method aspects and method steps described herein. For example, the policy managing entity may be configured to carry out any of the steps of the method according to the first aspect. The policy managing entity may comprise or be configured as a PCRF.

According to a third aspect, a system for supporting provisioning of one or more of a plurality of rules of a policy managing entity is provided. The policy managing entity is provided in a core network of a communication network and is arranged between an access gateway and an authentication server of the core network of the communication network. The system comprises the policy managing as described herein and at least one access gateway as described herein.

The system may be configured to perform the steps of any one of the method aspects and method steps as described herein. For example, the system may be configured to carry out any of the steps of the method according to the second aspect.

In general, the steps of any one of the method aspects described herein may equally be embodied in one or more suitable components, devices or units, e.g. in suitable components of policy managing entity and/or the access point and/or the system.

According to a fourth aspect, a computer program is provided. The computer program comprises program code portions for performing the steps of any one of the method aspects described herein, when the computer program is run on one or more computing devices. The computer program may be stored on a computer-readable recording medium.

### Brief description of the drawings

In the following, the present disclosure will further be described with reference to exemplary embodiments illustrated in the figures, in which
- Figure 1: shows an Initial Location Sharing procedure according to a 3GPP solution;
- Figure 2: shows an Updated Location Sharing procedure according to a 3GPP solution;
- Figure 3: shows an Updated Location Sharing based on core network trigger according to a 3GPP solution;
- Figure 4: schematically illustrates a device embodiment of a policy managing entity and a device embodiment of an access point;
- Figure 5: schematically illustrates a flowchart implemented in the device embodiments of figure 4;
- Figure 6: schematically illustrates User Equipments in the coverage area of access points;
- Figures 7a and 7b: show an Initial Session Authentication procedure;
plurality of rules to be applied based on the location information and to create a user session for the terminal by binding the identification information with the location information.

The access point according to the fifth aspect may be configured to perform any one of the method aspects and method steps described herein. For example, the access point may be configured to carry out any of the steps of the method according to the third aspect. The access point may comprise or be configured as a WLAN or Wi-Fi access point.

According to a sixth aspect, a system for supporting provisioning of one or more of a plurality of rules of a policy managing entity is provided. The policy managing entity is provided in a core network of a communication network and is arranged between an access point and an authentication server of the core network of the communication network. The system comprises the policy managing as described herein and at least one access point as described herein.

The system may be configured to perform the steps of any one of the method aspects and method steps as described herein. For example, the system may be configured to carry out any of the steps of the method according to the second aspect.

In general, the steps of any one of the method aspects described herein may equally be embodied in one or more suitable components, devices or units, e.g. in suitable components of policy managing entity and/or the access point and/or the system.

According to a seventh aspect, a computer program is provided. The computer program comprises program code portions for performing the steps of any one of the method aspects described herein, when the computer program is run on one or more computing devices. The computer program may be stored on a computer-readable recording medium.

### Brief description of the drawings

In the following, the present disclosure will further be described with reference to exemplary embodiments illustrated in the figures, in which:

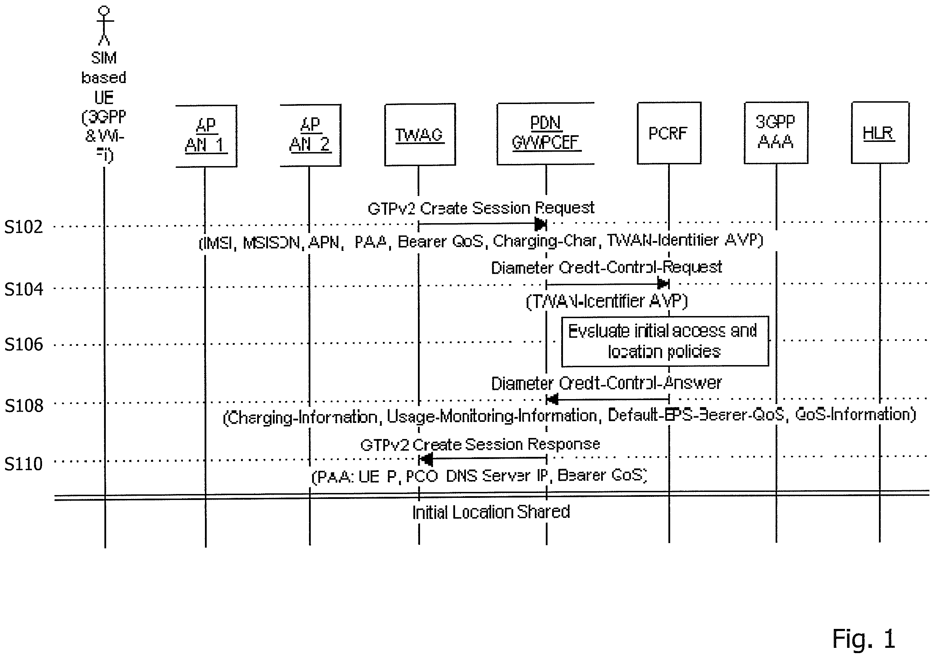

- Figure 1: shows an Initial Location Sharing procedure according to a 3GPP solution;

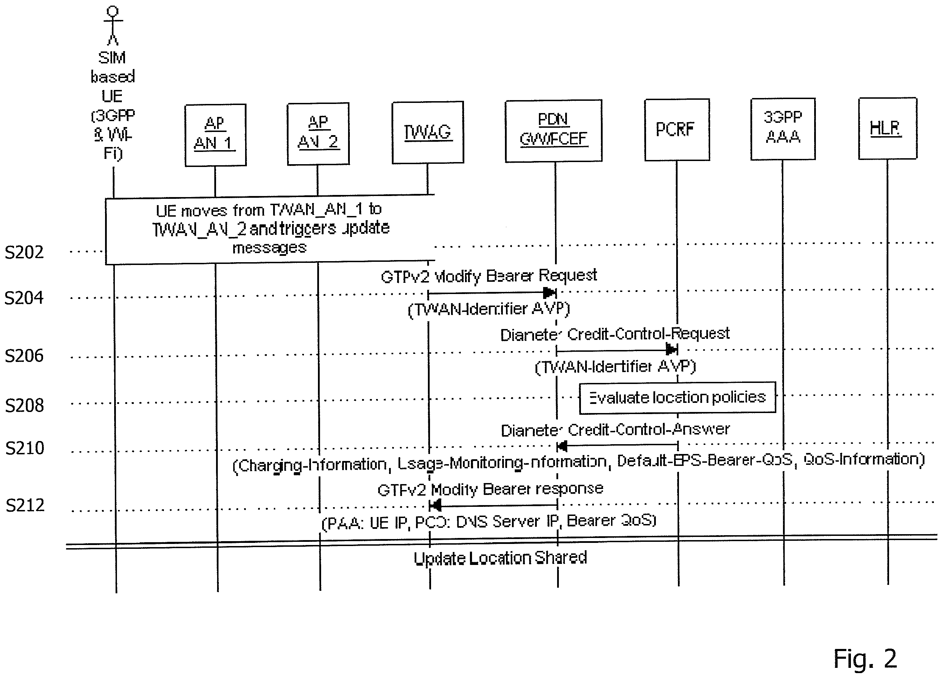

- Figure 2: shows an Updated Location Sharing procedure according to a 3GPP solution;

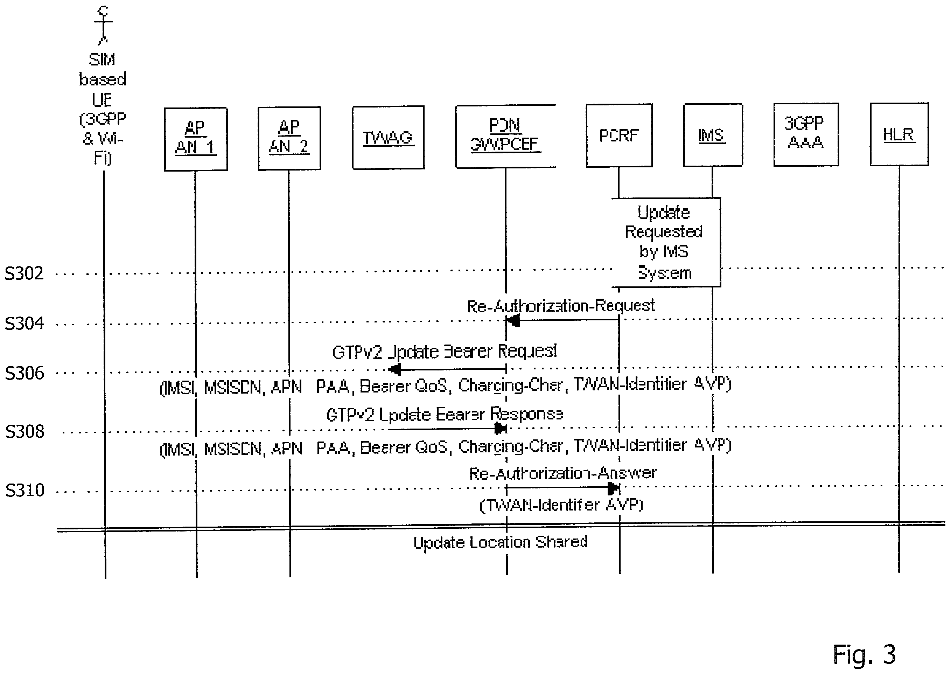

- Figure 3: shows an Updated Location Sharing based on core network trigger according to a 3GPP solution;

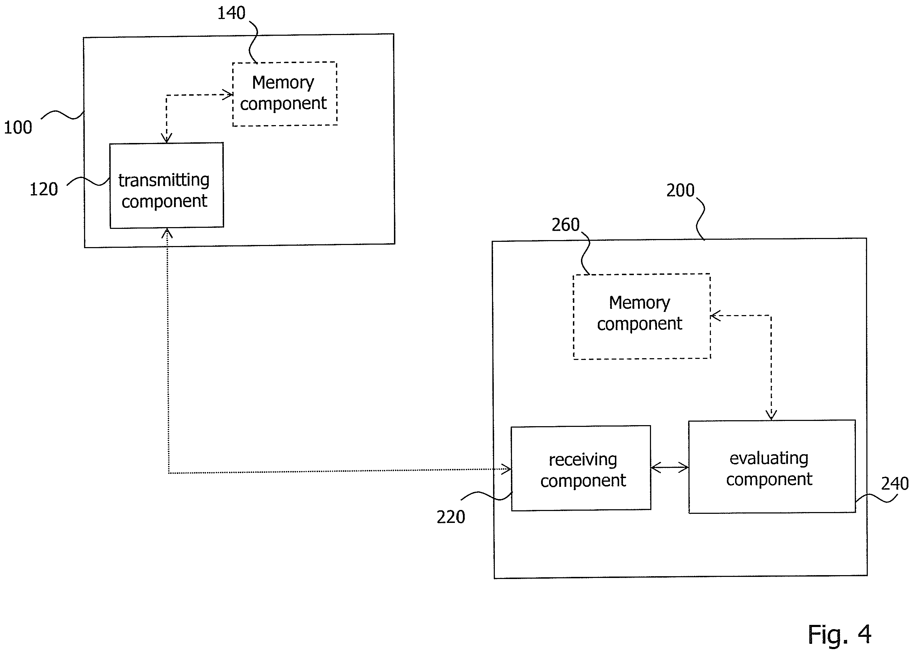

- Figure 4: schematically illustrates a device embodiment of a policy managing entity and a device embodiment of an access point;

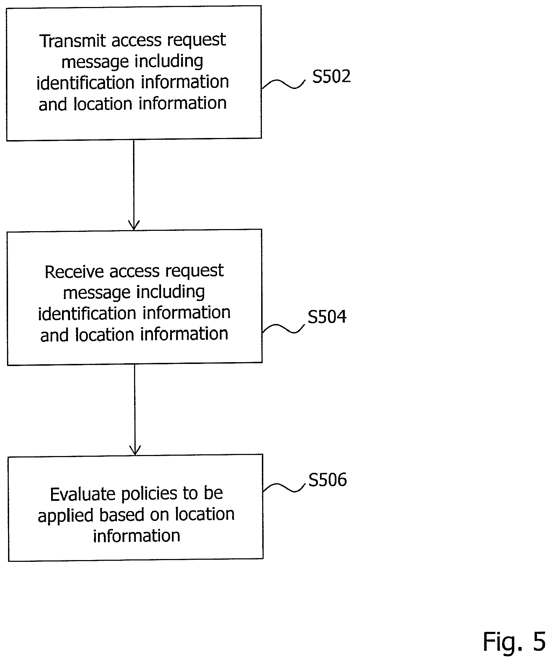

- Figure 5: schematically illustrates a flowchart implemented in the device embodiments of figure 4;

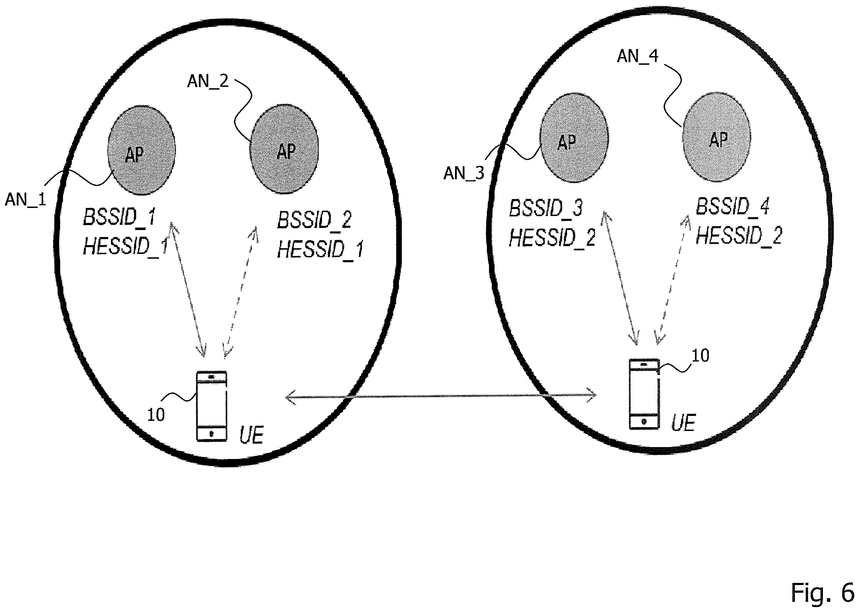

- Figure 6: schematically illustrates User Equipments in the coverage area of access points;

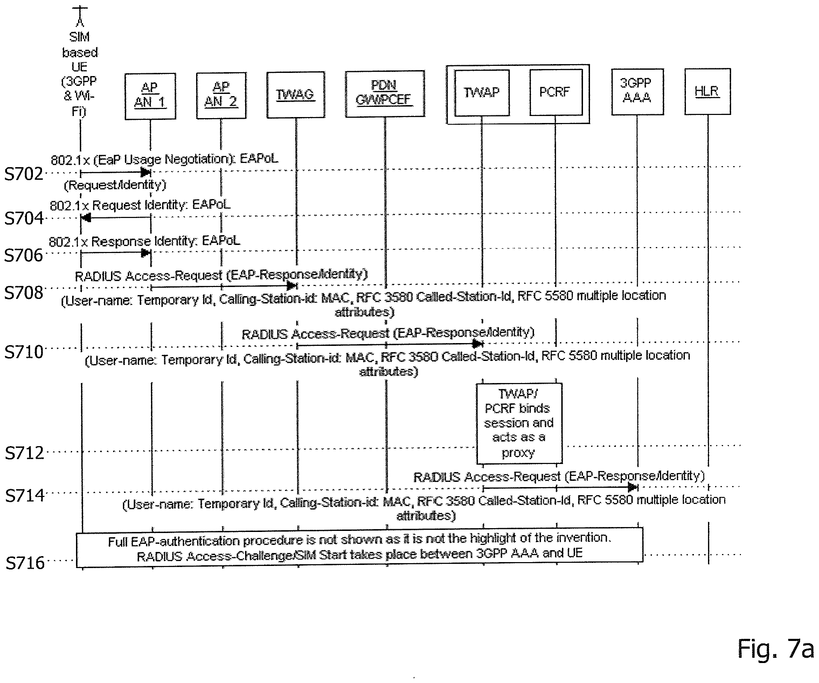

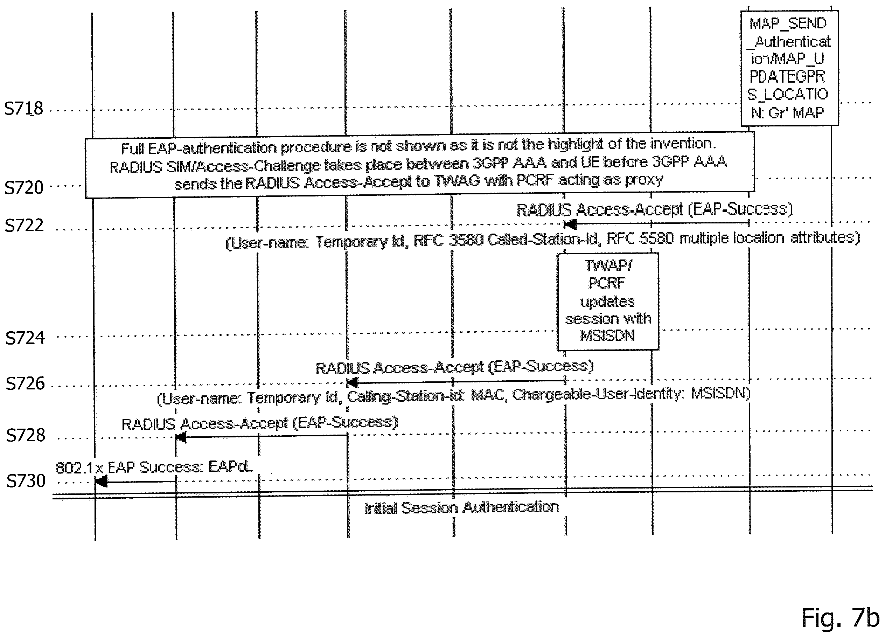

- Figures 7a and 7b: show an Initial Session Authentication procedure;

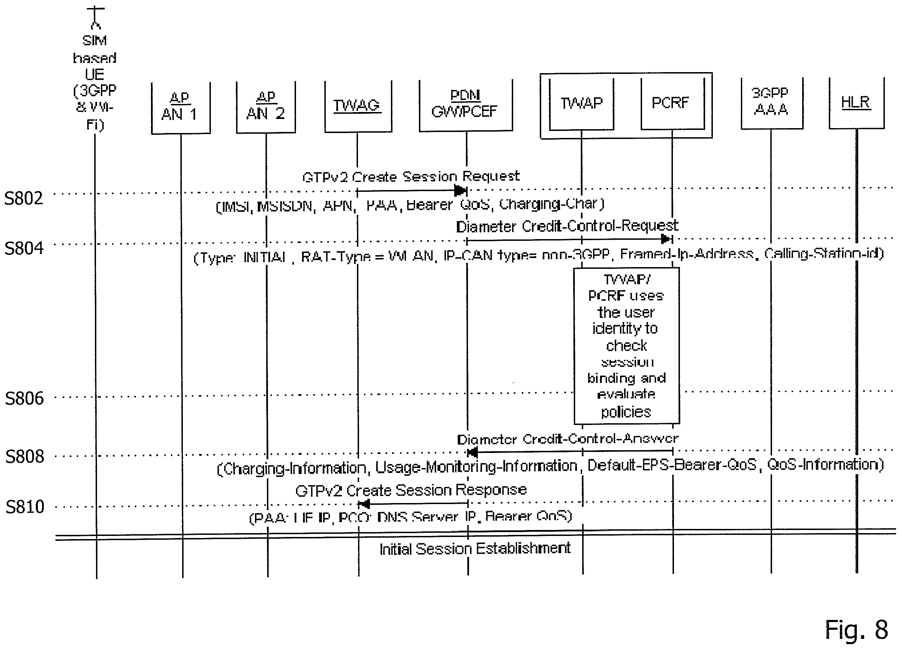

- Figure 8: shows an Initial Session Establishment procedure; and

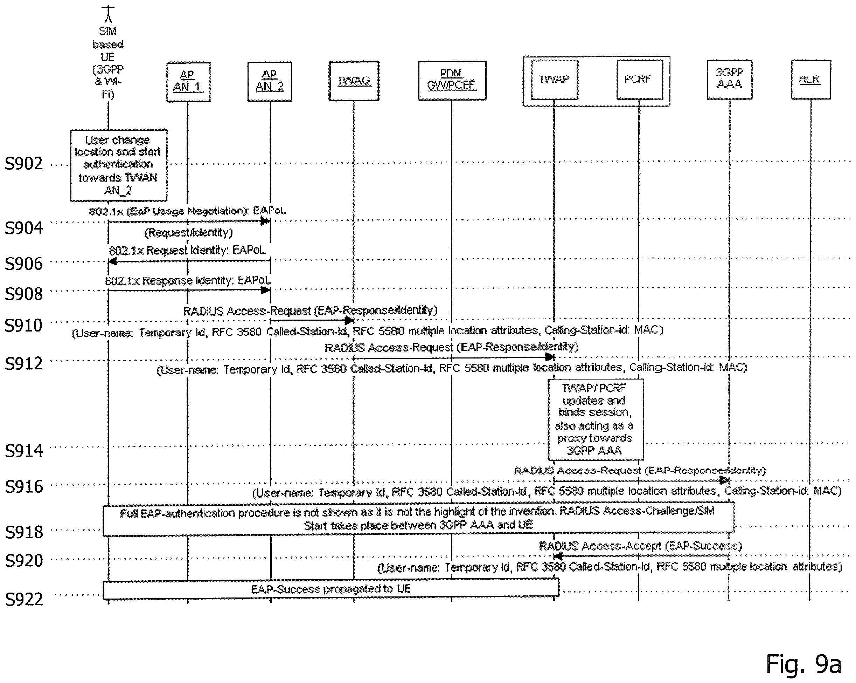

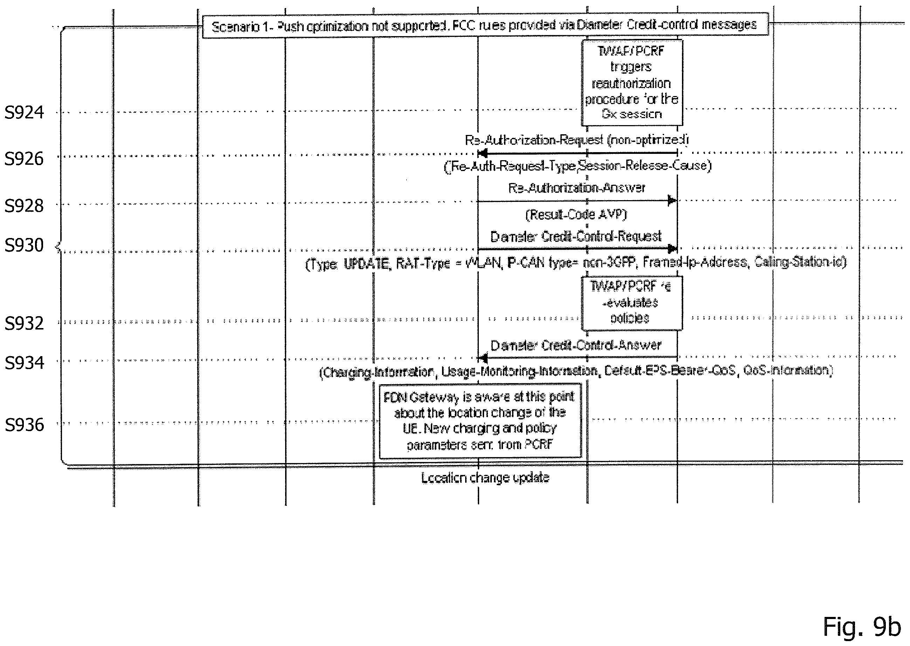

- Figures 9a and 9b: show a Location change update procedure.

### Detailed description

In the following description, for purposes of explanation and not limitation, specific details are set forth, such as specific network topologies including particular network nodes, in order to provide a thorough understanding of the present disclosure. It will be apparent to one skilled in the art that the present disclosure may be practiced in other embodiments that depart from these specific details. For example, the skilled person will appreciate that the present disclosure may be practiced with authentication and update procedures different from the specific procedures discussed below to illustrate the present disclosure. Also, although the present disclosure is described with reference to Wi-Fi Networks, the present disclosure may be practiced in other wireless local area networks to which mobile or stationary users may attach, for example, general Wireless Local Area Networks (WLAN) and WiMAX networks. Further, even if in the below a User Equipment (UE) is used as one example of a terminal and Policy and Charging Rules Function (PCRF) is used as one example of a policy manager, the present disclosure is not limited thereto.

Those skilled in the art will further appreciate that functions explained herein below may be implemented using individual hardware circuitry, using software functioning in conjunction with a programmed microprocessor or a general purpose computer, using an Application Specific Integrated Circuit (ASIC) and/or using one or more Digital Signal Processors (DSPs). It will also be appreciated that when the present disclosure is described as a method, it may also be embodied in a computer processor and a memory coupled to a processor, wherein the memory is encoded with one or more programs to perform the methods disclosed herein when executed by the processor.

Figure 1 shows a call flow diagram of a proposal making use of 3GPP Rel. 12 NETLOC_TWAN WID. 3GPP Rel. 12 NETLOC_TWAN WID has finalized some location identifier parameters that can be used between Trusted Wireless Access Gateway (TWAG) and Packet Data Network (PDN) Gateway (GW) for S2a session as location identifiers for Trusted Wireless Access Network (TWAN) access network such as Wi-Fi Access Points or Hotspot locations. In the example of Figure 1, TWAN comprises two access points (APs), namely AP AN_1 and AP AN_2. According to the example shown in Figure 1, an initial location can be shared by TWAG in S2a using TWAN-Identifier Attribute-Value Pairs (AVP). That is, TWAG sends a GTPv2 Create Session Request in step S102 to PDN GW including TWAN-Identifier AVP. Subsequently, these additional location identifier parameters can be used between PDN GW and PCRF for location based policies using Gx interface. For this purpose, PDN GW (in short: PGW) subsequently sends a Gx Diameter Credit-Control-Request (CCR) message to the PCRF in step S104. The CCR message includes TWAN-Identifier AVP. The PCRF can then evaluate initial access and location policies by considering the TWAN-Identifier AVP in step S106 and can instruct Policy and Charging Enforcement Function (PCEF) to enforce policies by sending a Diameter Credit-Control-Answer (CCA) message to the PCEF in step S108. The PCEF can then enforce the policies by sending the relevant information in a GTPv2 Create Session Response message to TWAG in step S110.

It has been proposed in the NETLOC_TWAN WID to use existing procedures on S2a interface to update location information, i.e., Bearer Modification. This is shown in Figure 2. In accordance therewith, either PGW or TWAG sends a Modify Bearer message to the peer entity, i.e., PCRF, which will result in the new location shared in the response message. Location update means with respect to the example of Figure 2 that the UE of a user moves from the coverage area of AP AN_1 to the coverage area of AP AN_2 (step S202). By way of example, it is illustrated in Figure 2 that a GTPv2 Modify Bearer Request message is sent from TWAG to PCRF. That is, once the user moves to another Wi-Fi AP coverage in step S202, updated location information can be shared by TWAG in S2a using TWAN-Identifier AVP in GTPv2 Modify Bearer Request message as shown in step S204 of Figure 2. The PGW can then subsequently send a Gx CCR message to PCRF with the new location information in step S206. Similarly to the initial access mentioned above with respect to Figure 1, the PCRF can then evaluate in step S208 location policies to be applied by considering the new (updated) location information signaled in TWAN-Identifier AVP and can instruct PCEF to enforce the policies by sending a Diameter CCA message to PCEF in step S210. PCEF can then enforce the policies by sending the relevant information in a GTPv2 Modify Bearer Response message to TWAG in step S212.

Updated location information can also be shared when it is requested by a core network entity, e.g., Internet Protocol (IP) Multimedia Subsystem (IMS) system, as shown in Figure 3. The IMS system can request over Gx an updated location from PCRF in step S302. PCRF does a re-authorization towards PDN GW by sending a Re-Authorization-Request message (step S304), and PDN GW in turn asks TWAG to modify the bearer by sending a GTPv2 Update Bearer Request message (step S306). The updated bearer can, again, contain the TWAN-Identifier AVP. Finally, TWAG sends a GTPv2 Update Bearer Response message to PDN GW in step S308 and PDN GW sends a Re-Authorization-Answer message to PCRF in step S310.

The solution illustrated above with respect to figures 1 to 3 presents some limitations and problems. The solution, at the moment, only focusses on the Packet Core network receiving location information based on initial S2a session setup between the TWAG and the PDN GW. Moreover, the current 3GPP solution shown in Figure 1 is not efficient since it results in an increase of signalling between TWAG and PDN GW, and between PDN GW and PCRF. Another problem with the existing solution is that said 3GPP solution relies on the retrieval of the location information, i.e. the TWAN-Identifier, based on the ability of TWAG to get that information. However, in the current standards (3GPP TS 23.203, 3GPP TS 23.402 and BBF TR-291) it is not clear how TWAG should get that information, which may result in implementation problems. So for vendors to implement the existing solution defined in 3GPP Rel. 12, they would need to update three functions/nodes: TWAG, PDN GW and PCRF.

The solution presented in the following proposes a mechanism to update location information in core networks based on updates received from Wi-Fi networks in an enhanced policy manager. The enhanced policy manager comprises Trusted WLAN Authentication Authorization Accounting (AAA) Proxy (TWAP) and PCRF functionality. Based on this information the enhanced policy manager may apply dedicated 3GPP Policy Control and Charging rules based on user locations and user location changes. The solution makes use of existing PCRF functionality and supported standard protocols, and existing standard signaling between PCRF and PDN GW to send new policies to PDN GW when the user location changes.

For sake of explanation rather than limitation, the enhanced policy manager will be in the following simply be referred to as TWAP/PCRF to underline that it comprises TWAP and/or PCRF functionality. The TWAP may be regarded as a logical AAA element or functionality that binds subscription data of a terminal, e.g. a UE's subscription data held by its 3GPP provider, to the Media Access Control (MAC) Address seen by the wireless local area network access network, e.g., the WLAN Access Network. It may provide the TWAG with such information together with L2 attach/detach events when needed as triggers. PCRF can be regarded as a node, e.g. a software node, or functionality designated in real-time to determine policy rules in a multimedia network. PCRF typically is a component, e.g. a software component that operates at the network core and accesses subscriber databases and other specialized functions, such as a charging system, in a centralized manner. The PCRF is normally the part of the network architecture that aggregates information to and from the network, operational support systems, and other sources (such as portals) in real time, supporting the creation of rules and then automatically making policy decisions for each subscriber active on the network. Such a network might offer multiple services, quality of service (QoS) levels, and charging rules.

Figure 4 schematically illustrates a Wi-Fi AP 100 (in short: AP 100) connected to TWAP/PCRF 200. Although not shown in Figure 4, multiple APs may be connected to TWAP/PCRF 200. AP 100 comprises a transmitting component 120. Further, AP 100 may comprise a memory component 140. The memory component 140 allows AP 100 to store various data including authentication and encryption data. TWAP/PCRF 200 comprises a receiving component 220 and an evaluating component 240. Further, TWAP/PCRF 200 may comprise a memory component 260. The memory component 260 may enable TWAP/PCRF 200 to aggregate the information to and from the network, operational support systems, and other sources. As exemplarily shown in Figure 4, evaluating component 240 is bi-directionally connected to memory component 260 in order to access the information stored in memory component 260, e.g., retrieve data from and store data in the memory component 260.

In Figure 5, a flowchart of three method embodiments is shown which can be explained with reference to the simplified architecture of Figure 4. The first method embodiment is illustrated by step S502 of Figure 5 and can be performed by AP 100 of Figure 4. The second method embodiment is illustrated by steps S504 and S506 of Figure 5 and can be performed by TWAP/PCRF 200 of Figure 4. The third method embodiment is illustrated by steps S502, S504 and S506 of Figure 5 and can be performed by interworking of AP 100 and TWAP/PCRF 200 of Figure 4. For sake of brevity only the third embodiment will be explained in the following. However, the details set forth below equally apply to the isolated implementation of the respective steps S502 to S506 of the first and second method embodiments as carried out in AP 100 and TWAP/PCRF 200, respectively.

In step S502, AP 100, more particularly transmitting component 120 of AP 100, transmits an access request message comprising location information and identification information of a UE in the coverage area of AP 100. The identification information uniquely identifies the UE. In step S504, TWAP/PCRF 200, more particularly receiving component 220 of TWAP/PCRF 200, receives the access request message comprising the location information and the identification information. In step S506, TWAP/PCRF 200, more particularly evaluating component 240 of TWAP/PCRF 200, evaluates one or more of a plurality of rules to be applied based on the location information. In other words, based on the location information, TWAP/PCRF 200, more particularly evaluating component 240 of TWAP/PCRF 200, evaluates which of the plurality of rules is/are to be applied.

Further details regarding the aforementioned embodiments will be explained below with respect to Figures 6 to 9b. At first, it will be explained with respect to Figure 6 how the location information referred to with respect to Figures 5 and 7a to 9b can be implemented. Figure 6 shows, by way of example, two possible ways of implementing location information. As can be seen on the left side of figure 6, a UE 10 is served by AP AN_1 (indicated by the continuous arrow on the left side of figure 6). In other words, UE 10 is in the coverage area of AP AN_1. AP AN_1 is uniquely identified by Basic service set identification (BSSID) BSSID_1. A BSSID uniquely identifies a basic service set (BSS). As a BSSID includes the MAC address of the AP of the corresponding BSS, the MAC address makes the BSSID unique. In consequence, each BSS is uniquely identified by a BSSID. The BSS provides the basic building-block of an 802.11 WLAN. A single AP together with all associated stations (STAs) is called a BSS. A BSS is not to be confused with the coverage of an access point, known as the basic service area (BSA). As each BSS is uniquely identified by a BSSID and a BSS comprises one single AP, the BSSID also uniquely identifies the single AP. In consequence, AP AN_1 is uniquely identified by BSSID BSSID_1. When UE 10 moves to AP AN_2, a location update will be triggered. AP AN_2 is uniquely identified by BSSID BSSID_2. The foregoing is schematically illustrated on the left side of Figure 6. In consequence, when BSSID is used as location identifier, location updates are triggered whenever UE 10 moves from one AP, e.g., AP AN_1, to another AP, e.g. AP AN_2. In this case, BSSID is used as the location identifier. The same happens if UE 10 moves from AP AN_3 to AP AN_4, which are both shown on the right side of Figure 6. In the exemplary situation of Figure 6, four BSSIDs, namely BSSID_1 to BSSID_4, uniquely identify the respective location of UE 10, i.e., the AP which serves UE 10.

However, the location information granularity can be different to the aforementioned example. Since an individual Wi-Fi APs coverage is generally very small compared to an Long Term Evolution (LTE) cell coverage, there can be several Wi-Fi APs in one location or venue. When the user moves between these APs, there will be very frequent location updates seen by the enhanced policy manager, resulting in frequent policy updates towards the PDN GW. Hence, in place of using BSSID as the location identifier for the enhanced policy manager acting as PCRF to base policy update decisions on, Homogeneous Extended Service Set Identifier (HESSID) may be used. Two or more APs may be interconnected to form an extended service set (ESS). Each ESS can be uniquely identified by a HESSID. HESSID can be shared by the two or more Wi-Fi APs as defined in Hotspot 2.0 Passpoint, for example, and can be sent in a new RADIUS or Diameter attribute during EAP-authentication procedure, for example. In this case, HESSID serves as the location information. The enhanced policy manager will then only update policies towards the PDN GW when the user changes a larger Wi-Fi coverage area, e.g., a venue like shopping mall, stadium, office, etc. This solution helps to reduce signaling between PCRF and PDN GW. The foregoing is schematically illustrated in Figure 6. When HESSID is used as location identifier, location updates are not always triggered whenever UE 10 moves from one AP, e.g., AP AN_1, to another AP, e.g. AP AN_2. This is because both AP AN_1 and AP AN_2 are identified by the same HESSID, namely HESSID_1. Only when the UE 10 moves from an AP in the coverage area of an ESS to another AP in the coverage area of another ESS a location update is triggered. For example, when UE 10 moves from the coverage area of AP AN_2, which is identified by HESSID_1, to the coverage area of AP AN_3, which is identified by HESSID_2, a location update is triggered.

For sake of explanation rather than limitation it is herewith assumed in the following that the user location and corresponding policy and charging rule is updated whenever a user moves between two Wi-Fi APs such as AP AN_1 and AP AN_2.

In order to implement the location information, different location specific attributes may be used. For example, the following attributes within RADIUS can be used to convey location-related information within authentication and accounting messages: Called-Station-Id (RFC 3580) to map AP SSID/BSSID/HESSID; NAS-Identifier (RFC 2865); Operator-Name (RFC 5580); Location-Information (RFC 5580); Location-Data (RFC 5580).

With respect to figures 7a to 9b it is assumed without limitation that PCRF and TWAP functionalities are able to access each ones information, e.g. directly through application programming interface (API) to each other's database(s) or through accessing directly a session status through a system call. Different implementations are conceivable for achieving that the PCRF and TWAP functionalities are able to access each ones information. According to a first possible implementation, the PCRF and TWAP functionality may be co-located in the same entity or chassis, as shown in Figures 7a to 9b, by way of example. According to a second possible implementation, the TWAP functionality may be co-located within the PCRF or vice versa in the sense that the TWAP functionality may be embedded within the PCRF or vice versa. According to a third possible implementation, the PCRF may be separated from the authenticator (i.e., the TWAP) but the PCRF may be able to talk to the TWAP and vice versa by means of a kind of interface or system call. In accordance therewith, the co-located PCRF and TWAP functionalities will be commonly referred to as TWAP/PCRF as mentioned above.

The initial session authentication is shown in Figures 7a and 7b. In step S702, the user, such as the user of UE 10 of Figure 6, starts Wi-Fi association/attach towards a Wi-Fi AP, such as AP AN_1 of Figure 6, which is protected by WPA2-Enterprise using 802.1x. This triggers the Wi-Fi AP, i.e. in the present case AP AN_1, to request the UE's identity in step S704. The UE 10 responds with its identity in step S706. The start of the Wi-Fi association/attach towards the Wi-Fi AP also triggers EAP-authentication using RADIUS protocol. Diameter protocol can also be used as an alternate wrapper for EAP authentication messages. For sake of simplicity it is, with respect to Figures 7a and 7b, only referred to RADIUS protocol encapsulating EAP-SIM authentication method. Other EAP methods for 802.1x authentication can also be used. For authentication, AP AN_1 sends a RADIUS Access-Request message to TWAG in step S708. The Wi-Fi APs such as AP AN_1 can add location specific attributes in the RADIUS or Diameter messages as specified in WBA WRIX specification and IETF RFCs 3580 & 5580. For example, IETF has covered in detail procedures for reporting location information in RFC 5580, and also specific RADIUS attributes to use for reporting location information. These procedures cover Network Access Server (NAS) (Wi-Fi AP) aspects. Referring to step S708, AP AN_1 adds location specific attributes (location information) to the RADIUS Access Request message sent to TWAG. The location specific attributes may be or comprise BSSID or HESSID as explained above with reference to Figure 6. TWAG forwards the RADIUS Access-Request including the location specific attributes to TWAP/PRCF.

The TWAP/PCRF as a proxy between TWAG (the TWAG is shown in the figures as an example of a gateway) and 3GPP AAA (the 3GPP AAA is shown in the figures as an example of an authentication server) in the authentication path 'sees' these location information attributes upon receipt of the RADIUS Access-Request message in step S710. In the following, it is assumed for explanation rather than limitation that TWAP/PCRF binds a user session with the location information attributes. For example, TWAP/PCRF binds the UE MAC address, permanent user identity (IMSI) and/or MSISDN with the location of that user in step S712. Instead of completing this binding procedure in step S712, this binding (which may also be referred to as mapping) may at least partially be done after the TWAP/PCRF sees the RADIUS Access-Accept message from the 3GPP AAA in step S722.

Returning to the RADIUS Authentication Request, the TWAP component of the TWAP/PCRF receives the RADIUS Access-Request message coming from the AP that serves the user through the RADIUS interface in step S710. The TWAP component forwards this information to the AAA (in step S714). During or before this forwarding process, the TWAP of the TWAP/PCRF creates an internal FIXED USER SESSION, as an example of the abovementioned user session, storing in that session state the information received in the RADIUS Access-Request message, including the location information provided by the AP. Only then the system may forward the information to the AAA. Steps S716 to S720 relating to the EAP-authentication procedure are now skipped for sake of brevity as they are known to the skilled person.

In the RADIUS Authentication Response, when the AAA replies with the Access-Accept (in step S722), it will send it through the TWAP functionality again. Once the TWAP functionality of the TWAP/PCRF receives that message, it can correlate it with the existing (previously created) FIXED USER SESSION. This may include updating the FIXED USER SESSION with the MSISDN in step S724. The AAA may send more information about the user than the MSISDN. The system can then update the existing FIXED USER SESSION by adding this additional information.

During the previous step S724 an additional step may be performed. After updating the FIXED USER SESSION with the new information, the TWAP/PCRF may check if there is any GX USER SESSION using the received MSISDN as a key. That session can be stored at a different database than the FIXED USER SESSION or may be part of an internal session state information, but as assumed before, the TWAP/PCRF has access to both FIXED and GX USER SESSIONs.

If it is determined in step S724 that there is NO GX USER SESSION, then the TWAP/PCRF does nothing and just forwards the RADIUS messages, i.e. RADIUS Access-Accept message (step S726) and RADIUS Access-Accept message (step S728), to the AP AN_1. Finally, the AP AN_1 sends an 802.1x EAP Success message to the UE (step S730).

If it is determined in step S724 that there is a GX USER SESSION, then the TWAP/PCRF triggers a Gx Session Re-Authorization. In this Re-Authorization the PCRF functionality in the TWAP/PCRF re-evaluates the policies to apply taking into account the location information associated with the FIXED USER SESSION. This will be described in more detail below with respect to figures 9a and 9b.

The initial session establishment shown in figure 8 is covered in 3GPP TS 23.402. After successful EAP-authentication by 3GPP AAA, the TWAG setups S2a control and user session with the PDN GW by sending out a GTPv2 Create Session Request message (step S802). The PDN GW as part of the S2a session request can initiate, in step S804, a Diameter CCR towards TWAP/PCRF by sending out a Diameter CCR message in response to receipt of the GTPv2 Create Session Request message. As part of this CCR message, the user identity (either IMSI or MSISDN or both) will be sent by the PDN GW to TWAP/PCRF. The TWAP/PCRF then uses the user identity, checks the session mapping created during the EAP-Authentication procedure for the user location, and retrieves the corresponding PCC rules and initial Quality of Service (QoS) in step S806. In more detail, in the case that no GX USER SESSION exists yet, and the PCRF receives a Diameter CCR-Initial message (Diameter CCR message) from the PDN GW/PCEF, the TWAP/PCRF checks if there is any FIXED USER SESSION for the MSISDN that came in the CCR-Initial (Diameter CCR message of step S804). If the FIXED USER SESSION exists, the PCRF will evaluate the policies to apply taking into account the location information associated with the FIXED USER SESSION. After the session checking, TWAP/PCRF sends a Diameter CCA message (step S808) and PDN GW/PCEF sends a GTPv2 Create Session Response message (step S810).

The scenario of a user location change is shown in Figures 9a and 9b. In order to be considered as a location change scenario in accordance with Figures 9a and 9b rather than as an initial authentication procedure in accordance with Figures 7a and 7b, the two Wi-Fi APs AN_1 and AN_2 have to be connected to the same TWAG (in this case, TWAG will not re-setup the GTP session). In case the two Wi-Fi APs are connected to different TWAGs, then the second TWAG will setup a new S2a session to the PDN GW. This will be considered as an initial session authentication procedure in accordance with Figures 7a and 7b by the PCRF (the enhanced policy manager can see, for example, whether the source IP address of the RADIUS message is different from the previous source IP address to differentiate between the two scenarios).

In the present example it is assumed without limitation that a location change will take place when the user leaves the Wi-Fi coverage of AP AN_1, and enters the coverage of AP AN_2. This is shown in steps S902 to S908. After the location change, AP_AN2 starts an authentication procedure towards the AAA, and includes its own location information, e.g., BSSID_2, in the RADIUS or Diameter authentication messages in step S910. That is, AP AN_2 sends a RADIUS Access-Request message to TWAG in step S910, which itself sends the RADIUS Access-Request message to TWAP/PCRF in step S912.

The TWAP/PCRF sees the new location information values for the existing UE MAC address session in step S914. If there is a GX USER SESSION, then the system will trigger a Gx Session Re-Authorization. In this Re-Authorization, the PCRF in the TWAP/PCRF re-evaluates the policies to apply taking into account the location information associated with the FIXED USER SESSION. In other words, the TWAP/PCRF then evaluates if new policies apply for the updated location for that user (step S914). If yes, then TWAP/PCRF acting in this case as an PCRF functionality, initiates the Gateway Control and QoS Policy Rules Provision Procedure specified in TS 23.203 (step S924) using a Diameter Re-authentication-Request message (step S926) towards the PDN GW. The Gateway Control and QoS Policy Rules Provision Procedure specified in TS 23.203 is shown in steps S926 to S936.

According to this procedure, TWAP/PCRF sends a Re-Authorization-Request message to PDN GW/PCEF (step S926). The PDN GW containing PCEF functionality responds to the PCRF indicating its ability to enforce the rules provided (see Re-Authorization Answer message in step S928). In the PCEF, different scenarios are possible. In a first scenario, PCEF does not support Policy and Rules provision during the PCRF initiated procedure. As the procedure used to enforce the PCEF with the PCC Rules is independent of the present disclosure related to the provision of location information, only the call flow based on said first scenario is illustrated in Figure 9b for sake of explanation rather than limitation. In consequence, the PCEF initiates the request of PCC Rules Provision Procedure as specified in 3GPP TS 23.203 using Diameter CCR-Update message (also called Diameter CCR message in step S930). The TWAP/PCRF evaluates the new conditions for the existing user session (FIXED USER SESSION). Location based policies are evaluated before the PCRF provides updated PCC rules to the PCEF for enforcement by means of PCC Rules Provision procedure specified in TS 23.203 using Diameter CCA-Update message (also called Diameter CCA message in step S934). According to a second scenario, PCEF does support Policy and Rules provision during PCRF initiated procedure. In this case, PCC Rule and QoS is provided in Re-Authorization-Answer message (step S928).

Summarizing the above, the enhanced policy manager (named TWAP/PCRF above, by way of example) maps location information attributes seen in RADIUS/Diameter EAP-authentication as a proxy, and uses the location information to accordingly provide or update policy rules to PDN GW on Gx interface. In more detail, the RADIUS/Diameter authentication proxy functionality can be re-used in the enhanced policy manager to capture the location information sent by the Wi-Fi APs forming the Trusted Wireless Access Network (TWAN) for both initial user authentication, and also re-authentication procedure when the user moves. If the location received is during the initial authentication procedure, the enhanced policy manager, as an authentication proxy (TWAP) between TWAG and 3GPP AAA, can collect it, and, as an PCRF, can evaluate which policy to send to the PGW when the initial Diameter Credit-Control-Request for Gx session setup is received from PDN GW. If the location information received is during the authentication procedure initiated by the new Wi-Fi AP the user is trying to connect to, the enhanced policy manager, as an authentication proxy (TWAP), can re-evaluate if the new location requires an updated policy, and if yes, can re-use existing standard Diameter re-authentication messages towards PDN GW to trigger Gx session re-authentication (as specified in 3GPP TS 23.203). Once the PDN GW re-triggers Gx session re-authentication, the enhanced policy manager as PCRF can then share the updated policies in the Gx session authentication response.

In consequence, the enhanced policy manager entity is the only node that necessarily needs to be updated. Other entities, such as APs, may be updated or not. The enhanced policy manager function may need to implement TWAP functionality as proxy function in PCRF is not specified for EAP-authentication in TS 29.212. Further, the enhanced policy manager uses location specific attributes from RADIUS/Diameter authentication messages and maps them to rules policy engine, and binds EAP-RADIUS or EAP-Diameter user sessions with Gx sessions. Thus, enhanced policy manager can be able to map the RADIUS or Diameter authentication sessions with the Gx session, so that it can use the rules policy engine for the right user session on Gx interface.

Hence, as a result of the above, existing standard signaling can be used between PCRF and PDN GW as far as possible to send new policy and charging control rules to PDN GW based on location updates. For this purpose PUSH procedure may be used by PCRF to initiate the provision of unsolicited PCC rules and event triggers towards PCEF. In consequence, no additional signaling is required between TWAG and PDN GW to update the PCRF with any user location change. This results in an overall simplification of the signaling procedure. The solution also offers further advantages. For example, no updates are required by vendors for the S2a interface between TWAG and PDN GW in contrast to 3GPP's existing solution, and no updates are required by vendors for the Gx interface between PDN GW and PCRF in contrast to 3GPP's existing solution.

## Claims

1. A method of supporting provisioning of one or more of a plurality of rules of a policy managing entity provided in a core network of a communication network, the policy managing entity being arranged between an access gateway of a wireless local area network and an authentication server of the core network of the communication network, the method comprising:
- receiving (S504, S710), by the policy managing entity from the access gateway, an access request message comprising location information and identification information of a terminal in the coverage area of an access point connected with the access gateway, the identification information uniquely identifying the terminal;
- evaluating (S506), by the policy managing entity, one or more of the plurality of rules to be applied based on the location information; and creating, by the policy managing entity, a user session for the terminal by binding the identification information with the location information, wherein the policy managing entity acts as a proxy between the access gateway and the authentication server, and forwards the access request message to the authentication server.

2. The method of claim 1, further comprising:
- receiving, by the access gateway, the access request message from the access point, and transmitting the access request message to the policy management entity.

3. The method of claim 1 or 2, wherein the method further comprises creating, by the policy managing entity, a Gx session for the terminal upon receipt of a Credit Control Request, CCR, message, or triggering a Gx session re-authorization procedure, if a Gx session created for the terminal exists in the policy managing entity.

4. The method of any one of claims 1 to 3, wherein the step of evaluating comprises evaluating, by the policy managing entity, one or more of the plurality of rules to be applied based on the location information, if a user session created for the terminal exists in the policy managing entity.

5. The method of any one of claims 1 to 4, wherein the access request message comprises or is a Remote Authentication Dial In User Service, RADIUS, or Diameter access request message.

6. The method of any one of claims 1 to 5, wherein the location information specifies at least one of the location of the terminal and one or more access points serving the terminal, and/or uniquely identifies the access point or two or more access points including the access point.

7. The method of any one of claims 1 to 6, wherein the identification information is configured as or comprises at least one of a MAC address of the terminal, an International Mobile Subscriber Identity, IMSI, and an MSISDN.

8. The method of any one of claims 1 to 7, wherein the policy managing entity is configured as or comprises a PCRF and/or wherein the plurality of policies comprises at least one of Policy Control and Charging, PCC, rules and Quality of Service, QoS, rules.

9. A computer program comprising program code portions for performing the method of any one of claims 1 to 8 when the computer program is run on one or more computing devices.

10. A policy managing entity (200) for supporting provisioning of one or more of a plurality of rules, the policy managing entity (200) being provided in a core network of a communication network and being arranged between an access gateway of a wireless local area network and an authentication server of the core network of the communication network, the policy managing entity (200) comprising:
- a receiving component (220) configured to receive an access request message comprising location information and identification information of a terminal in the coverage area of an access point (100) connected to the access gateway, the identification information uniquely identifying the terminal; and
- an evaluating component (240) configured to evaluate one or more of the plurality of rules to be applied based on the location information;
wherein the policy managing entity is configured to create a user session for the terminal by binding the identification information with the location information and to act as a proxy between the access gateway and the authentication server, by forwarding the access request message to the authentication server.

11. The policy managing entity (200) of claim 10, being further configured to perform the method according to any one of claims 3 to 8.

12. A system for supporting provisioning of one or more of a plurality of rules of a policy managing entity provided in a core network of a communication network and arranged between an access point and an authentication server of the core network of the communication network, the system comprising:
- the policy managing entity (200) of claim 10 or 11; and
- at least one access gateway configured to receive the access request message from an access point and to transmit the access request message to the policy management entity.

## Patentansprüche

1. Verfahren zur Unterstützung der Bereitstellung einer oder mehrerer einer Mehrzahl von Regeln einer Richtlinienverwaltungsentität in einem Kernnetzwerk eines Kommunikationsnetzwerks, wobei die Richtlinienverwaltungsentität zwischen einem Zugangs-Gateway eines drahtlosen lokalen Netzwerks und einem Authentifizierungsserver des Kernnetzwerks des Kommunikationsnetzwerks angeordnet ist, und das Verfahren umfasst:
- Empfangen (S504, S710) einer Zugangsanforderungsnachricht, die Standortinformationen und Identifikationsinformationen eines Endgeräts im Versorgungsgebiet eines Zugangspunkts umfasst, der mit dem Zugangs-Gateway verbunden ist, durch die Richtlinienverwaltungsentität vom Zugangs-Gateway, wobei die Identifikationsinformationen das Endgerät eindeutig identifizieren;
- Festsetzen (S506) einer oder mehrerer der Mehrzahl von Regeln, die angewendet werden sollen, durch die Richtlinienverwaltungsentität basierend auf den Standortinformationen; und Erstellen einer Benutzersitzung für das Endgerät durch die Richtlinienverwaltungsentität durch Binden der Identifikationsinformationen an die Standortinformationen, wobei die Richtlinienverwaltungsentität als ein Proxy zwischen dem Zugangs-Gateway und dem Authentifizierungsserver dient und die Zugangsanforderungsnachricht an den Authentifizierungsserver weiterleitet.

2. Verfahren nach Anspruch 1, ferner umfassend:
- Empfangen der Zugangsanforderung vom Zugangspunkt durch das Zugangs-Gateway und Senden der Zugangsanforderung an die Richtlinienverwaltungsentität.

3. Verfahren nach Anspruch 1 oder 2, wobei das Verfahren ferner ein Erstellen einer Gx-Sitzung für das Endgerät durch die Richtlinienverwaltungsentität bei Empfang einer Nachricht zur Kreditkontrollanforderung, CCR, oder Auslösen einer Prozedur zur Neuautorisierung einer Gx-Sitzung umfasst, wenn eine für das Endgerät erstellte Gx-Sitzung in der Richtlinienverwaltungsentität besteht.

4. Verfahren nach einem der Ansprüche 1 bis 3, wobei der Schritt des Festsetzens ein Festsetzen einer oder mehrerer der Mehrzahl von Regeln, die angewendet werden sollen, durch die Richtlinienverwaltungsentität basierend auf den Standortinformationen umfasst, wenn eine für das Endgerät erstellte Benutzersitzung in der Richtlinienverwaltungsentität besteht.

5. Verfahren nach einem der Ansprüche 1 bis 4, wobei die Zugangsanforderungsnachricht eine Zugangsanforderungsnachricht des Authentifizierungsdiensts für sich einwählende Benutzer, RADIUS, oder des Diameter ist oder umfasst.

6. Verfahren nach einem der Ansprüche 1 bis 5, wobei die Standortinformationen mindestens eines des Standorts des Endgeräts und eines oder mehrerer Zugangspunkte spezifizieren, die das Endgerät versorgen, und/oder den Zugangspunkt oder zwei oder mehr Zugangspunkte eindeutig identifizieren, die den Zugangspunkt umfassen.

7. Verfahren nach einem der Ansprüche 1 bis 6, wobei die Identifikationsinformationen als mindestens eine von einer MAC-Adresse des Endgeräts, einer internationalen Mobilteilnehmerkennung, IMSI, und einer MSISDN konfiguriert sind oder mindestens eine derselben umfassen.

8. Verfahren nach einem der Ansprüche 1 bis 7, wobei die Richtlinienverwaltungsentität als eine PCRF konfiguriert ist oder eine solche umfasst, und/oder wobei die Mehrzahl von Richtlinien mindestens eine von Regeln hinsichtlich Richtliniensteuerung und Abrechnung, PCRF, und Regeln hinsichtlich Dienstqualität, QoS, umfasst.

9. Computerprogrammprodukt, umfassend Programmcodeabschnitte zum Durchführen des Verfahrens nach einem der Ansprüche 1 bis 8, wenn das Computerprogrammprodukt auf einer oder mehreren Computervorrichtungen ausgeführt wird.

10. Richtlinienverwaltungsentität (200) zum Unterstützen der Bereitstellung einer oder mehrerer einer Mehrzahl von Regeln, wobei die Richtlinienverwaltungsentität (200) in einem Kernnetzwerk eines Kommunikationsnetzwerks vorgesehen und zwischen einem Zugangs-Gateway eines drahtlosen lokalen Netzwerks und einem Authentifizierungsserver des Kernnetzwerks des Kommunikationsnetzwerks angeordnet ist, wobei die Richtlinienverwaltungsentität (200) umfasst:
- eine Empfangskomponente (220), die zum Empfangen einer Zugangsanforderungsnachricht konfiguriert ist, die Standortinformationen und Identifikationsinformationen eines Endgeräts im Versorgungsgebiet eines Zugangspunkts (100) umfasst, der mit dem Zugangs-Gateway verbunden ist, wobei die Identifikationsinformationen das Endgerät eindeutig identifizieren; und
- eine Festsetzungskomponente (240), die so konfiguriert ist, dass sie eine oder mehrere der Mehrzahl von Regeln, die angewendet werden sollen, basierend auf den Standortinformationen festsetzt;
wobei die Richtlinienverwaltungsentität so konfiguriert ist, dass sie durch Binden der Identifikationsinformationen an die Standortinformationen eine Benutzersitzung für das Endgerät erstellt und durch Weiterleiten der Zugangsanforderungsnachricht an den Authentifizierungsserver als ein Proxy zwischen dem Zugangs-Gateway und dem Authentifizierungsserver dient.

11. Richtlinienverwaltungsentität (200) nach Anspruch 10, die ferner zum Durchführen die Verfahrens nach einem der Ansprüche 3 bis 8 konfiguriert ist.

12. System zum Unterstützen der Bereitstellung einer oder mehrerer einer Mehrzahl von Regeln einer Richtlinienverwaltungsentität, die in einem Kernnetzwerk eines Kommunikationsnetzwerks vorgesehen und Richtlinienverwaltungsentität zwischen einem Zugangspunkt und einem Authentifizierungsserver des Kernnetzwerks des Kommunikationsnetzwerks angeordnet ist, wobei das System umfasst:
- die Richtlinienverwaltungsentität (200) nach Anspruch 10 oder 11; und
- mindestens ein Zugangs-Gateway, das zum Empfangen der Zugangsanforderung vom Zugangspunkt durch das Zugangs-Gateway und zum Senden der Zugangsanforderung an die Richtlinienverwaltungsentität konfiguriert ist.

## Revendications

1. Procédé de prise en charge de la fourniture d'une ou plusieurs d'une pluralité de règles d'une entité de gestion de politique prévue dans un réseau central d'un réseau de communication, l'entité de gestion de politique étant agencée entre une passerelle d'accès d'un réseau local sans fil et un serveur d'authentification du réseau central du réseau de communication, le procédé comprenant :
- la réception (S504, S710), par l'entité de gestion de politique en provenance de la passerelle d'accès, d'un message de demande d'accès comprenant des informations d'emplacement et des informations d'identification d'un terminal dans la zone de couverture d'un point d'accès relié à la passerelle d'accès, les informations d'identification identifiant le terminal de manière unique ;
- l'évaluation (S506), par l'entité de gestion de politique, d'une ou plusieurs de la pluralité de règles à appliquer sur la base des informations d'emplacement ; et la création, par l'entité de gestion de politique, d'une session d'utilisateur pour le terminal en liant les informations d'identification aux informations d'emplacement, dans lequel l'entité de gestion de politique agit en tant qu'un proxy entre la passerelle d'accès et le serveur d'authentification, et transfère le message de demande d'accès au serveur d'authentification.

2. Procédé selon la revendication 1, comprenant en outre :
- la réception, par la passerelle d'accès, du message de demande d'accès en provenance du point d'accès, et la transmission du message de demande d'accès à destination de l'entité de gestion de politique.

3. Procédé selon la revendication 1 ou 2, dans lequel le procédé comprend en outre la création, par l'entité de gestion de politique, d'une session Gx pour le terminal à la réception d'un message de demande de contrôle de crédit, CCR, ou le déclenchement d'une procédure de ré-autorisation de session Gx, s'il existe une session Gx créée pour le terminal dans l'entité de gestion de politique.

4. Procédé selon l'une quelconque des revendications 1 à 3, dans lequel l'étape de l'évaluation comprend l'évaluation, par l'entité de gestion de politique, d'une ou plusieurs de la pluralité de règles à appliquer sur la base des informations d'emplacement, s'il existe une session d'utilisateur créée pour le terminal dans l'entité de gestion de politique.

5. Procédé selon l'une quelconque des revendications 1 à 4, dans lequel le message de demande d'accès comprend ou est un message de demande d'accès Remote Authentication Dial In User Service, RADIUS, ou Diameter.

6. Procédé selon l'une quelconque des revendications 1 à 5, dans lequel les informations d'emplacement spécifient au moins l'un de l'emplacement du terminal et d'un ou plusieurs points d'accès desservant le terminal, et/ou identifient de manière unique le point d'accès ou au moins deux points d'accès incluant le point d'accès.

7. Procédé selon l'une quelconque des revendications 1 à 6, dans lequel les informations d'identification sont configurées en tant que ou comprennent au moins l'un d'une adresse MAC du terminal, d'une identité internationale d'abonné mobile, IMSI, et d'un MSISDN.

8. Procédé selon l'une quelconque des revendications 1 à 7, dans lequel l'entité de gestion de politique est configurée en tant que ou comprend une PCRF, et/ou dans lequel la pluralité de politiques comprennent au moins l'une de règles de facturation et de commande de politique, PCC, et de règles de qualité de service, QoS.

9. Programme informatique comprenant des portions de code de programme pour réaliser le procédé selon l'une quelconque des revendications 1 à 8 lorsque le programme informatique est exécuté sur un ou plusieurs dispositifs informatiques.

10. Entité de gestion de politique (200) pour la prise en charge de la fourniture d'une ou plusieurs d'une pluralité de règles, l'entité de gestion de politique (200) étant prévue dans un réseau central d'un réseau de communication et étant agencée entre une passerelle d'accès d'un réseau local sans fil et un serveur d'authentification du réseau central du réseau de communication, l'entité de gestion de politique (200) comprenant :
- un composant de réception (220) configuré pour la réception d'un message de demande d'accès comprenant des informations d'emplacement et des informations d'identification d'un terminal dans la zone de couverture d'un point d'accès (100) relié à la passerelle d'accès, les informations d'identification identifiant le terminal de manière unique ; et
- un composant d'évaluation (240) configuré pour l'évaluation d'une ou plusieurs de la pluralité de règles à appliquer sur la base des informations d'emplacement ;
dans laquelle l'entité de gestion de politique est configurée pour la création d'une session d'utilisateur pour le terminal en liant les informations d'identification aux informations d'emplacement, et pour agir en tant qu'un proxy entre la passerelle d'accès et le serveur d'authentification, par le transfert du message de demande d'accès au serveur d'authentification.

11. Entité de gestion de politique (200) selon la revendication 10, configurée en outre pour réaliser le procédé selon l'une quelconque des revendications 3 à 8.

12. Système de prise en charge de la fourniture d'une ou plusieurs d'une pluralité de règles d'une entité de gestion de politique prévue dans un réseau central d'un réseau de communication et agencée entre un point d'accès et un serveur d'authentification du réseau central du réseau de communication, le système comprenant :
- l'entité de gestion de politique (200) selon la revendication 10 ou 11 ; et
- au moins une passerelle d'accès configurée pour la réception du message de demande d'accès en provenance d'un point d'accès et la transmission du message de demande d'accès à destination de l'entité de gestion de politique.
